# EUROPEAN PATENT SPECIFICATION

(11) **EP 4 198 472 B1**
(45) Date of publication and mention of the grant of the patent: **21.05.2025**
(21) Application number: 22209394.0
(22) Date of filing: 24.11.2022
(51) Int. Cl.: G01K 3/00, G01K 5/72

(54) **TEMPERATURE-SENSING TAPE BASED UPON BIMETAL SWITCH, AND METHOD OF TEMPERATURE CONTROL**
TEMPERATURFÜHLBAND AUF BASIS EINES BIMETALLSCHALTERS UND TEMPERATURSTEUERUNGSVERFAHREN
BANDE DE DÉTECTION DE TEMPÉRATURE BASÉE SUR UN COMMUTATEUR BIMÉTALLIQUE, ET PROCÉDÉ DE RÉGULATION DE TEMPÉRATURE

(30) Priority: 15.12.2021 US 202117551344
(43) Date of publication of application: 21.06.2023
(73) Proprietor: Littelfuse, Inc., Chicago, IL 60631 (US)
(72) Inventor: Pineda, Martin G., Chicago, 60631 (US); Godinez, Sergio Fuentes, Chicago, 60631 (US); Matus, Yuriy Borisovich, Chicago, 60631 (US)
(74) Representative: Arnold & Siedsma

(56) References cited:
- US-A- 4 638 107
- US-A- 4 878 226
- US-A1- 2011 309 844

## Description

### Field

The present embodiment relates generally to temperature-sensing devices. More specifically, the present embodiments relate to a temperature-sensing tape having a plurality of integrated temperature-sensing elements.

### Description of Related Art

Systems and devices such as electrical devices, batteries, or other equipment can be damaged by overtemperature conditions if such conditions are allowed to persist. Thus, it is common for systems and/or devices to be equipped with temperature-sensing devices that can be used to measure temperature variations at discrete locations on the surface of an electrical device. If a measured temperature exceeds a predetermined threshold, the electrical device may be automatically shut off until the overtemperature condition subsides or is remedied, thereby mitigating damage to the device or system being protected. US 2011/309844 A1 discloses a system that uses 'pearl' sensors in line with a heating cable to measure the temperature at locations along the heating cable.

Batteries, such as Lithium ion batteries are designed to operate below a threshold or maximum safe operating temperature. Accordingly, a protection sensor to protect such a battery will optimally operate to prevent operation of the battery above the threshold temperature. To this end, temperature sensors such as PTC sensors, have been developed to trip at a targeted temperature in the range of the threshold temperature of the device or system to be protected. Ideally, in operation, given PTC sensor will trip at a corresponding temperature characteristic of the PTC material used to form the PTC sensor.

However, for a given product, such as a battery system, maximum operating temperature requirements may change. Accordingly, different sensors, having different trip temperatures, may be called for to accommodate changing requirements for thermal protection.

It is with respect to these and other considerations that the present improvements may be useful.

### SUMMARY

This Summary is provided to introduce a selection of concepts in a simplified form that are further described below in the Detailed Description.

In one embodiment, a temperature-sensing tape is provided. The temperature-sensing tape may include a plurality of flexible conductor portions. The temperature-sensing tape may also include a sensor array, comprising at least one temperature-sensing element, disposed in electrical series with the plurality of flexible conductor portions, where the at least one temperature-sensing element comprises a bimetallic switch.

In another embodiment, a thermal protection arrangement is provided, including a protected component; and a temperature-sensing tape, thermally coupled to the protected component. The temperature-sensing tape may include a plurality of flexible conductor portions; and a sensor array, comprising at least one temperature-sensing element, disposed in electrical series with the plurality of flexible conductor portions, where the at least one temperature-sensing element comprises a bimetallic switch.

In a further embodiment, a method of protecting a component may include ,adhering a temperature-sensing tape to at least one protected area of the component, where the temperature-sensing tape has at least one temperature-sensing element, where the at least one temperature-sensing element includes a bimetallic switch. The method may also include determining a safe state corresponding to a logical "0" when an electrical resistance of the temperature-sensing tape is below a first threshold; and determining an unsafe state corresponding to a logical "1" when the electrical resistance of the temperature-sensing tape is above a second threshold.

### BRIEF DESCRIPTION OF THE DRAWINGS

**FIG. 1A** is a top view illustrating an exemplary embodiment of a temperature-sensing tape in accordance with the present disclosure;
**FIG. 1B** is a top view illustrating a variant of the temperature-sensing element of the temperature-sensing tape shown in **FIG. 1A****;**
**FIG. 2A** is a side view illustrating an exemplary embodiment of a bimetallic switch according to some embodiments of the present disclosure.
**FIG. 2B** illustrates the examples of normally closed switch operation and normally open operation.
**FIG. 2C** is a graph that illustrates the concept of electrical hysteresis for a bimetallic switch.
**FIG. 3** illustrates one example of electrical hysteresis for a bimetallic switch.
**FIG. 4** illustrates another example of electrical hysteresis for a bimetallic switch.
**FIG. 5** presents one example of a thermal protection arrangement, according to some embodiments of the present disclosure.
**FIG. 6** depicts an exemplary logic flow.

### DETAILED DESCRIPTION

Exemplary embodiments of a temperature-sensing tape in accordance with the present disclosure will now be described more fully hereinafter with reference to the accompanying drawings.

The present embodiments provide a temperature-sensing tape and a thermal protection arrangement and techniques, based upon a sensor array that is formed of temperature-sensing elements having a bimetallic switch. As used herein, a "tape," "temperature-sensing tape," or similar term, may refer to a structure having an array of temperature-sensing elements that are arranged in electrical series with a conductor, where the conductor may be integrated in a flexible tape material, integrated in a cloth material or woven structure, or may be a freestanding conductor, such as a wire. The tape may be adapted to be affixed to a protected element where temperature is to be measured, such as a battery. In particular, the tape may be affixed at least in locations of the tape where the temperature-sensing element is present, so as to impart thermal contact between the temperature-sensing element and protected element.

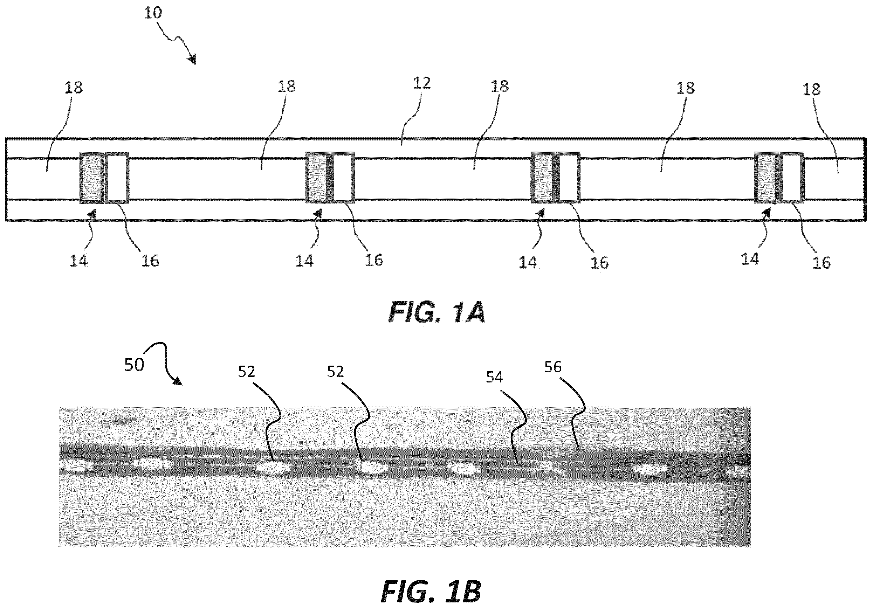

Referring to **FIG. 1A****,** a top view illustrating a temperature-sensing tape (hereinafter "the tape 10") in accordance with an exemplary embodiment of the present disclosure is shown. According to some embodiments, the tape 10 may include an electrically insulating support structure, such as a flexible substrate, shown as substrate 12. The substrate 12 may be formed of a strip of dielectric material having an adhesive material on one or both sides thereof for allowing the tape 10 to be adhered to a surface (e.g., a surface of an electrical device). In various, non-limiting embodiments, the substrate 12 may be Scotch Tape, polyvinyl chloride (PVC) tape, Mylar, etc. In other embodiments, the substrate 12 may be formed of a cloth or woven material.

A plurality of temperature-sensing elements 14 may be disposed on the substrate 12 and may be spaced apart from one another along a length of the substrate 12. Each of the temperature-sensing elements 14 may include a bimetal switch 16, acting as a temperature-sensitive switch. By way of example, the tape 10 is shown in **FIG. 1A** as including a total of four temperature-sensing elements. In various embodiments, the tape 10 may include a greater or fewer number of temperature-sensing elements 14 without departing from the present disclosure, with the total number of temperature-sensing elements 14 generally being dictated by the length of the tape 10 and the distance between the temperature-sensing elements 14. While the temperature-sensing elements 14 are shown in **FIG. 1A** as being evenly spaced apart from one another along the length of the substrate 12, various embodiments of the tape 10 may include temperature-sensing elements 14, disposed at irregular intervals along the length of the substrate 12, such as may be dictated by the requirements of a particular application of the tape 10.

The tape 10 may further include a conductive circuit, formed within an electrical conductor, arranged in electrical series with the temperature-sensing elements 14. In the specific example illustrated in FIG. 1A, the 'electrical conductor' is formed of a plurality of flexible conductor portions, shown as flexible conductors 18, disposed on the substrate 12. The flexible conductors 18 may extend between, and may be electrically connected to, the temperature-sensing elements 14 as further described below. The flexible conductors 18 may be formed of elongated segments of flexible, electrically conductive material that may be adhered to, printed on, or otherwise applied to the substrate 12. Examples of such materials include, but are not limited to, copper mesh, silver epoxy, various types of metal wire or ribbon, conductive ink, etc. As such, the flexible conductors 18 may have the shape of a flat foil, a round cross-section wire, a single strand wire, a multistrand wire, a flat wire, a rod, or other suitable shape.

As noted, the tape 10 may be sufficiently flexible to be applied to protected elements or arrays of elements that define various surfaces, including multiple surfaces extending at angles to one another, curved surfaces, and so forth. **FIG. 1B** is a top view illustrating a variant of the temperature-sensing tape shown in **FIG. 1A****.** In this example, the tape 50 includes a flexible substrate 56, with a flexible conductor 54 integrated onto the flexible substrate 56. The flexible conductor 54 includes a plurality of conductive segments, arranged in electrical series with a plurality of temperature-sensing elements, shown as temperature-sensing elements 52.

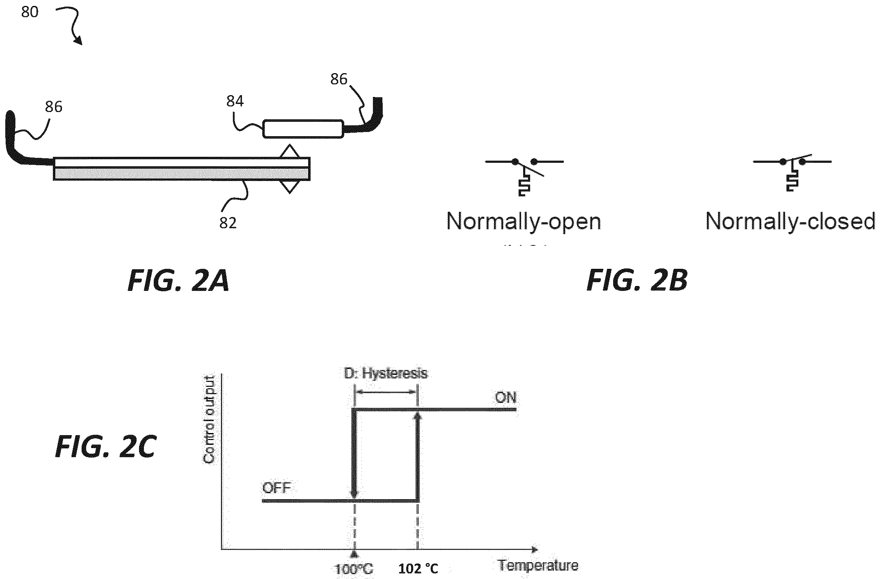

**FIG. 2A** is a side view illustrating an exemplary embodiment of a bimetallic switch according to some embodiments of the present disclosure. The bimetallic switch 80 may be incorporated in a temperature-sensing element, such as temperature-sensing element 14 or temperature-sensing element 52. The bimetallic switch 80 may be formed of any suitable known bimetallic material system. As shown, a bimetallic switch 80 is arranged in an open configuration, where a bimetallic element 82 is spaced apart from a contact 84. The bimetallic element 82 may be formed of two separate metal elements, arranged on top of one another, where the two different elements may be selected from any suitable pair of metal materials, as known in the art. As in known bimetal switches, the bimetallic element 82 may be formed of two different metals having two different thermal expansion coefficients (such as steel/copper, steel brass, or any other suitable bimetallic material system as known in the art). The two different metals may be formed as strips, for instance that are joined together to one another, such that the different thermal expansions force the bimetallic element 82 to change configuration when heated. For example, at a normal operating temperature range, the bimetallic element 82 may tend to be flat, while as temperature increases, the bimetallic element 82 may tend to bend in a given direction. Upon cooling the bimetallic element 82 may bend in the opposite direction as the bend direction upon heating.

Depending upon the exact configuration of the bimetallic element 82 and contact 84, and the normal operation temperature designed for the bimetallic switch 80, the bimetallic switch 80 may be considered a normally open switch or a normally closed switch. **FIG. 2B** illustrates the examples of normally closed switch operation and normally open switch operation. In normally closed configuration, electrical current may pass through the bimetallic switch 80, such as through conductors 86, attached to the contact 84 and to the bimetallic element 82. In an open configuration, the bimetallic switch 80 will not pass electrical current. According to embodiments of the disclosure, the bimetallic switch 80 may be arranged with a targeted switch temperature, suitable for thermal protection of an element to be protected, such as a battery. For example, a switch temperature to protect an element, such as a lithium ion battery, may range from 50 °C to 100 °C, according to just some non-limiting embodiments. As used herein, the term switch temperature, in the context of an overtemperature protection application, may refer to the temperature where a bimetallic switch changes from a closed configuration to an open configuration as the bimetallic switch heats up. In other words, according to various embodiments of the disclosure, a bimetallic switch, such as bimetallic switch 16, may be configured as a normally closed switch, where electrical current passes through the bimetallic switch 16 under normal operation. "Normal operation" may mean that the temperature of the protected element attached to the bimetallic switch is within a targeted operating range, such as a lithium ion battery designed for operating below 60 °C. Under normal operation, the bimetallic element remains touching an external contact to complete an electrical circuit. The switch temperature denotes that temperature where the bimetallic element deforms or changes shape during an increase in temperature, to the extent to no longer touch the electrical contact and thus to switch to an open circuit condition.

Note that in accordance with known bimetallic switches, the bimetallic switches of the present disclosure may act reversibly so that when cooled from a temperature above the switch temperature, the bimetallic switch will close and return an electrical circuit to a closed circuit condition. Note also that an electrical hysteresis may be present in the bimetallic switches of the present embodiments. In particular, the switch temperature upon heating may be greater than the return temperature upon cooling, where the 'return temperature' refers to the temperature of the bimetallic switch during cooling from above the switch temperature, where the bimetallic switch returns to a closed configuration.

Generally, the degree of hysteresis of a bimetallic switch of the present embodiments may vary, but may be equal to one degree C or more, several degrees, or up to tens of degrees according to some embodiments of the disclosure. **FIG. 2C** is an idealized graph that illustrates the concept of electrical hysteresis for a bimetallic switch. In this example, the switch temperature is 102 °C, which temperature may represent the temperature where electrical resistivity of a circuit markedly increases, while the return temperature is 100 °C. As such, the hysteresis in temperature between heating and cooling is 2 °C.

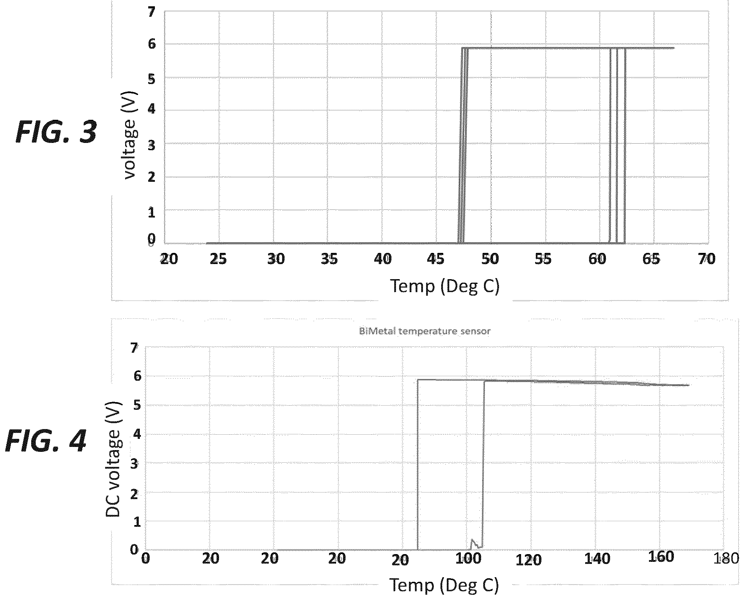

**FIG. 3** illustrates one example of electrical hysteresis for a bimetallic switch, while **FIG. 4** illustrates another example of electrical hysteresis for a bimetallic switch. In the example of FIG. 3, the switch temperature is 61 °C while the return temperature is 45 °C. In the example of FIG. 4, the switch temperature is 105 °C and the return temperature is 85° C.

Note that the above examples illustrate that a temperature-sensing element configured with a bimetallic switch may provide a truly digital response where current flow is abruptly cut off or returned at a given temperature. While the above examples may be implemented in a bimetallic switch configured with a bimetal strip foil, in other non-limiting embodiments, a bimetallic switch may be a bi-metal arm, a bi-stable disk, a micro-electromechanical system (MEMs) structure, or a metal wire structure. Moreover, a bimetallic switch using a MEMs structure, may include a MEMs structure formed on a printed circuit board substrate.

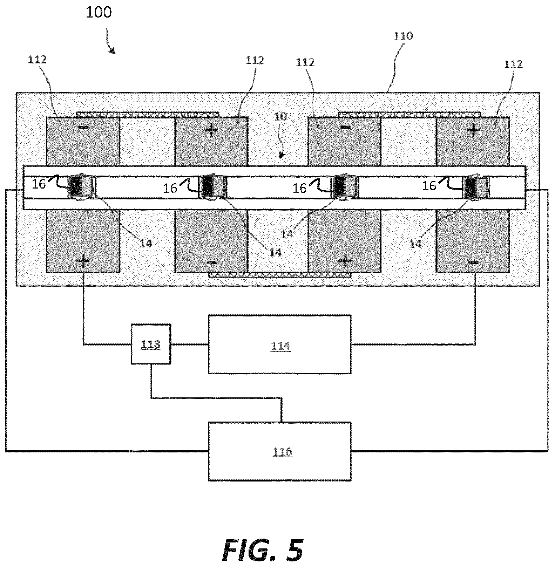

Referring to **FIG. 5****,** a schematic illustration of an exemplary protection arrangement 100 implementing the above-described tape (tape 10) is shown. The protection arrangement 100 may include one or more components (hereinafter "the protected component") that may be protected by the tape 10. In the exemplary embodiment shown in **FIG. 5****,** the protected component is a battery 110 having a plurality of cells 112 that are electrically connected in series. The battery 110 may be connected to a load 114 for supplying electrical power thereto. In various examples, the battery 110 may be a Li-ion battery, a Li-Polymer battery, a Ni-MH rechargeable battery, or the like. The present disclosure is not limited in the regard, and it is contemplated that the protected component may alternatively be, or may alternatively include, any of a variety of electrical power sources and/or electrical devices that may benefit from overtemperature protection.

The tape 10 may be adhered to the battery 110, with the temperature-sensing elements 14 disposed on surfaces of respective cells (cells 112) of the battery 110. Particularly, each of the temperature-sensing elements 14 may be positioned so as to be under the thermal influence of a respective one of the cells 112 such that an increase in a temperature of one of the cells 112 may cause an increase in a temperature of a respective one of the temperature-sensing elements 14 disposed thereon.

The protection arrangement 100 may further include a control element 116 (e.g., a digital control element such as an ASIC, a microprocessor, etc.) that may be electrically connected to the flexible conductors 18 of the tape 10 and that may be configured to monitor a resistance in the tape 10 as further described below. The control element 116 may also be operatively connected to a disconnect switch 118 (e.g., a FET, a relay, etc.) that may be connected in electrical series intermediate the battery 110 and the load 114.

During normal operation of the protection arrangement 100, the battery 110 may supply electrical power to the load 114, and the temperatures of the cells 112 may be within a normal operating range (*e.g*., less than 60 degrees Celsius, less than 80 degrees Celsius, etc.). However, upon the occurrence of an overtemperature condition, the temperature of one or more of the cells 112 may increase above the normal operating range, which increase may in-turn cause the temperatures of respective temperature-sensing elements 14 of the tape 10 to increase. If the temperature of one or more of the temperature-sensing elements 14 increases above the switching temperature, the resistance in the tape 10 may increase sharply as the bimetallic switch 16 causes an electrical open. An increase in the temperatures of the cells 112 may result from exposure to an external heat source (e.g., the protection arrangement 100 sitting out in the sun), or from an overcurrent condition caused by an internal fault in the battery 110, for example.

The control element 116 may be configured to monitor a resistance of the tape 10, or a voltage change, for example, and to control operation of the protection arrangement 100 accordingly. For example, when a bimetallic switch of the temperature-sensing element 14 is closed, the control element 116 measures a relatively low resistance in the tape 10, indicating that the temperatures of the temperature-sensing elements 14 are below the switch temperature. The control element 116 may determine that the temperatures of the cells 112 are within a normal, safe operating range. However, if the control element 116 measures a relatively high resistance in the tape 10, indicating that the temperature of one of more of the temperature-sensing elements 14 is above the switch temperature, the control element 116 may determine that the temperature of one or more of the cells 112 has exceeded the normal, safe operating range. If the control element 116 determines that the temperature of one or more of the cells 112 has exceeded the normal, safe operating range, the control element 116 may open the disconnect switch 118, thereby arresting the flow of current in the protection arrangement 100 and preventing or mitigating damage that could otherwise result if the overtemperature or overcurrent condition were allowed to persist.

In additional non-limiting embodiments, a protected component may include a power tool having a battery pack, an e-scooter or other electric vehicle, a laptop computer, a notebook computer, a large battery system. Ad advantage afforded by a flexible tape of the present embodiments is the ability to conveniently place a sensor of plurality of temperature sensors, as well as fuse elements at any suitable location in a three-dimensional object having any arbitrary shape.

Regarding the aforementioned embodiments, in some variants, the substrate 12 may have an adhesive on a bottom side of the tape 10, for attachment to a device being protected, on a bottom side of the tape 10, for attachment to a device being protected. In some embodiments, adhesive can be applied to just sections under a temperature-sensing element 14, to improve thermal contact to a surface of a device being protected. In particular embodiments, additives that have high thermal conductivity may be arranged within an adhesive, such as a high thermal conductivity powder, to improve thermal conductivity of the adhesive, and thus provide better thermal contact between a temperature-sensing element 14 and device being monitored or protected. Non-limiting examples of thermal high conductivity materials include intrinsic (low electrical conductivity) ZnO, Al₂O₃, AlN diamond paste, or high-thermal-conductivity electrically conductive particles including ceramic, metal or carbon based particles, fibers etc.

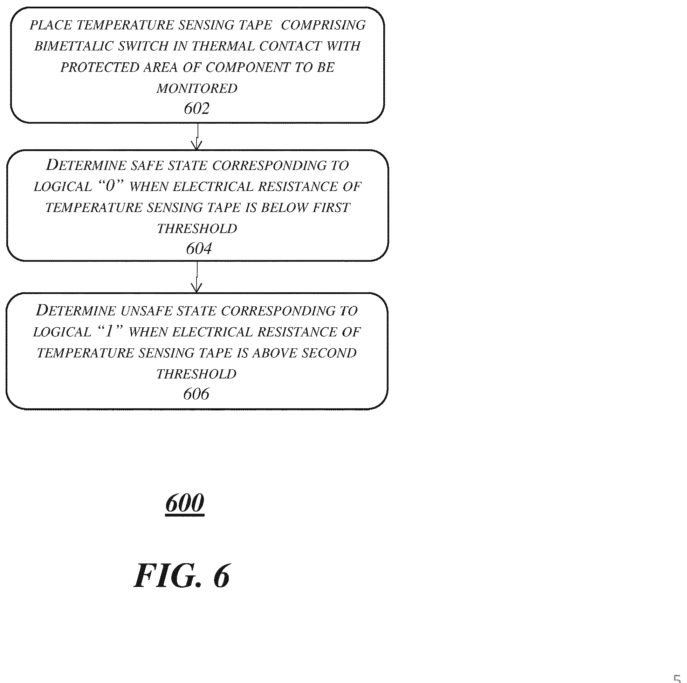

**FIG.** 6 presents a logic flow 600, in accordance with embodiments of the disclosure. At block 602, a temperature-sensing tape is adhered to a protected area of a component to be monitored. In some embodiments, the protected area may multiple different areas. The component to be monitored may be a battery in some embodiments. The temperature-sensing tape may include one or more sensing areas (such as a given sensing area and an additional sensing area), where a given sensing area overlaps with the protected area. The sensing area may include a bimetallic switch, arranged in an electrical circuit. The bimetallic switch may be arranged in a normally closed configuration according to some embodiments. In some embodiments, the multiple different sensing areas are arranged to overlap with the protected area where the temperature-sensing tape is adhered to the component. As such, the sensing area(s) are arranged in good thermal contact with the component.

At block 604, a safe state corresponding to a logical "0" (or alternatively a logical "1") is determined when the resistance of the temperature-sensing tape lies below a first threshold. At block 606 an unsafe state corresponding to a logical "1" (or alternatively a logical "0") is determined when the resistance of the temperature-sensing tape is above a second threshold. The second threshold may generally be greater than the first threshold.

In sum, the present embodiments provide various advantages for temperature-sensing and overtemperature control. For one, the use of a bimetallic switch provides a truly digital response as the switch transitions abruptly between an open circuit and closed circuit configuration. A tape arranged with bimetallic switch sensor of the present embodiments may be configured to provide switching temperatures over a wide temperature range, based on the same device. In addition, such a tape should pass reliability requirements well above an activation temperature.

## Claims

1. A temperature-sensing tape (10) comprising:
a plurality of flexible conductor portions (18);
a sensor array, comprising at least one temperature-sensing element (14), disposed in electrical series with the plurality of flexible conductor portions (18), the at least one temperature-sensing element (14) comprising a bimetallic switch (16,80), and,
**characterized in that** it further comprises an insulating support structure (12), wherein the plurality of flexible conductor portions (18) and the sensor array are disposed in contact with the insulating support structure (12), wherein the insulating support structure (12) is configured to thermally couple to an external component, such as a battery to be protected against an overtemperature condition.

2. The temperature-sensing tape of claim 1, the plurality of flexible conductor portions being arranged as a flat foil, a round cross-section wire, a single strand wire, a multistrand wire, a flat wire, or a rod.

3. The temperature-sensing tape of claim 1 or 2, wherein the insulating support structure comprises a flexible tape material.

4. The temperature-sensing tape of claim 1 or 2, wherein the insulating support structure comprises a cloth material.

5. The temperature-sensing tape of any of the preceding claims, wherein the bimetallic switch comprises a switch temperature.

6. The temperature-sensing tape according to claim 5, wherein the switch temperature is between 50 °C and 100 °C.

7. The temperature-sensing tape of any of the preceding claims, wherein the at least one temperature-sensing element comprises a plurality of temperature-sensing elements.

8. The temperature-sensing tape of any of the preceding claims, wherein the bimetallic switch comprises a bi-metal arm, a bi-stable disk, a micro-electromechanical system (MEMs) structure, or a metal wire structure.

9. The temperature-sensing tape of claim 8, wherein the bimetallic switch comprises a MEMs structure, formed on a printed circuit board substrate.

10. A thermal protection arrangement, comprising:
a protected component, such as a battery, and a temperature-sensing tape according to any of the preceding claims.

11. A method of protecting a component, comprising:
adhering a temperature-sensing tape according to any of claims 1 to 10 to at least one protected area of the component, the temperature-sensing tape having at least one temperature-sensing element, the at least one temperature-sensing element comprising a bimetallic switch;
determining a safe state corresponding to a logical "0" when an electrical resistance of the temperature-sensing tape is below a first threshold; and
determining an unsafe state corresponding to a logical "1" when the electrical resistance of the temperature-sensing tape is above a second threshold.

12. The method of claim 11, wherein the at least one temperature-sensing element is arranged in an electrical circuit, wherein a resistance of the electrical circuit is maintained above the second threshold when a temperature of the at least one temperature-sensing element is above a switch temperature of the bimetallic switch.

## Patentansprüche

1. Temperaturerfassungsband (10), umfassend:
eine Vielzahl von flexiblen Leiterabschnitte (18);
eine Sensoranordnung, umfassend mindestens ein Temperaturerfassungselement (14), das in elektrischer Reihe mit der Vielzahl von flexiblen Leiterabschnitten (18) eingerichtet ist, das mindestens eine Temperaturerfassungselement (14) umfassend einen Bimetallschalter (16, 80), und **dadurch gekennzeichnet, dass** es ferner eine isolierende Trägerstruktur (12) umfasst, wobei die Vielzahl von flexiblen Leiterabschnitten (18) und die Sensoranordnung in Kontakt mit der isolierenden Trägerstruktur (12) eingerichtet sind, wobei die isolierende Trägerstruktur (12) konfiguriert ist, um thermisch mit einer externen Komponente, wie einer Batterie, gekoppelt zu werden, um vor einem Übertemperaturzustand geschützt zu werden.

2. Temperaturerfassungsband nach Anspruch 1, wobei die Vielzahl von flexiblen Leiterabschnitten als eine flache Folie, ein Draht mit rundem Querschnitt, ein einadriger Draht, ein mehradriger Draht, ein flacher Draht oder ein Stab angeordnet ist.

3. Temperaturerfassungsband nach Anspruch 1 oder 2, wobei die isolierende Trägerstruktur ein flexibles Bandmaterial umfasst.

4. Temperaturerfassungsband nach Anspruch 1 oder 2, wobei die isolierende Trägerstruktur ein Stoffmaterial umfasst.

5. Temperaturerfassungsband nach einem der vorstehenden Ansprüche, wobei der Bimetallschalter eine Schalttemperatur umfasst.

6. Temperaturerfassungsband nach Anspruch 5, wobei die Schalttemperatur zwischen 50 °C und 100 °C liegt.

7. Temperaturerfassungsband nach einem der vorstehenden Ansprüche, wobei das mindestens eine Temperaturerfassungselement eine Vielzahl von Temperaturerfassungselementen umfasst.

8. Temperaturerfassungsband nach einem der vorstehenden Ansprüche, wobei der Bimetallschalter einen Bimetallarm, eine bistabile Scheibe, eine mikroelektromechanische Systemstruktur (MEMs-Struktur) oder eine Metalldrahtstruktur umfasst.

9. Temperaturerfassungsband nach Anspruch 8, wobei der Bimetallschalter eine MEMs-Struktur umfasst, die auf einem Leiterplattensubstrat ausgebildet ist.

10. Wärmeschutzanordnung, umfassend:
eine geschützte Komponente, wie eine Batterie, und ein Temperaturerfassungsband nach einem der vorstehenden Ansprüche.

11. Verfahren zum Schützen einer Komponente, umfassend:
Aufkleben eines Temperaturerfassungsbands nach einem der Ansprüche 1 bis 10 auf mindestens einen geschützten Bereich der Komponente, wobei das Temperaturerfassungsband mindestens ein Temperaturerfassungselement aufweist, das mindestens eine Temperaturerfassungselement umfassend einen Bimetallschalter;
Bestimmen eines sicheren Zustands, der einer logischen "0" entspricht, wenn ein elektrischer Widerstand des Temperaturerfassungsbands unter einem ersten Schwellenwert liegt; und
Bestimmen eines unsicheren Zustands, der einer logischen "1" entspricht, wenn der elektrische Widerstand des Temperaturerfassungsbands über einem zweiten Schwellenwert liegt.

12. Verfahren nach Anspruch 11,
wobei das mindestens eine Temperaturerfassungselement in einem elektrischen Schaltkreis angeordnet ist, wobei ein Widerstand des elektrischen Schaltkreises über dem zweiten Schwellenwert gehalten wird, wenn eine Temperatur des mindestens einen Temperaturerfassungselements über einer Schalttemperatur des Bimetallschalters liegt.

## Revendications

1. Bande de détection de température (10) comprenant :
une pluralité de parties conductrices flexibles (18) ;
un réseau de capteurs, comprenant au moins un élément de détection de température (14), disposé en série électrique avec la pluralité de parties conductrices flexibles (18), l'au moins un élément de détection de température (14) comprenant un commutateur bimétallique (16, 80), et, **caractérisée en ce qu'**elle comprend en outre une structure de support isolante (12), dans laquelle la pluralité de parties conductrices flexibles (18) et le réseau de capteurs sont disposés en contact avec la structure de support isolante (12), dans laquelle la structure de support isolante (12) est configurée pour se coupler thermiquement à un composant externe, tel qu'une batterie à protéger contre une condition de surchauffe.

2. Bande de détection de température selon la revendication 1, la pluralité de parties conductrices flexibles étant disposée comme une feuille plate, un fil à section transversale ronde, un fil monobrin, un fil multibrin, un fil plat, ou une tige.

3. Bande de détection de température selon la revendication 1 ou 2, dans laquelle la structure de support isolante comprend un matériau en bande flexible.

4. Bande de détection de température selon la revendication 1 ou 2, dans laquelle la structure de support isolante comprend un matériau en tissu.

5. Bande de détection de température selon l'une quelconque des revendications précédentes, dans laquelle le commutateur bimétallique comprend une température de commutation.

6. Bande de détection de température selon la revendication 5, dans laquelle la température de commutation est comprise entre 50 °C et 100 °C.

7. Bande de détection de température selon l'une quelconque des revendications précédentes, dans laquelle l'au moins un élément de détection de température comprend une pluralité d'éléments de détection de température.

8. Bande de détection de température selon l'une quelconque des revendications précédentes, dans laquelle le commutateur bimétallique comprend un bras bimétallique, un disque bistable, une structure de système microélectromécanique (MEMs), ou une structure de fil métallique.

9. Bande de détection de température selon la revendication 8, dans laquelle le commutateur bimétallique comprend une structure de MEMs, formée sur un substrat de carte de circuits imprimés.

10. Agencement de protection thermique, comprenant :
un composant protégé, tel qu'une batterie, et une bande de détection de température selon l'une quelconque des revendications précédentes.

11. Procédé de protection d'un composant, comprenant :
le collage d'une bande de détection de température selon l'une quelconque des revendications 1 à 10 sur au moins une zone protégée du composant, la bande de détection de température ayant au moins un élément de détection de température, l'au moins un élément de détection de température comprenant un commutateur bimétallique ;
la détermination d'un état sûr correspondant à un logique « 0 » lorsqu'une résistance électrique de la bande de détection de température est inférieure à un premier seuil ; et
la détermination d'un état peu sûr correspondant à un logique « 1 » lorsque la résistance électrique de la bande de détection de température est supérieure à un second seuil.

12. Procédé selon la revendication 11,
dans lequel l'au moins un élément de détection de température est disposé dans un circuit électrique, dans lequel une résistance du circuit électrique est maintenue au-dessus du second seuil lorsqu'une température de l'au moins un élément de détection de température est supérieure à une température de commutation du commutateur bimétallique.
